# EUROPÄISCHE PATENTSCHRIFT

(11) **EP 3 208 233 B1**
(45) Veröffentlichungstag und Bekanntmachung des Hinweises auf die Patenterteilung: **22.08.2018**
(21) Anmeldenummer: 16156070.1
(22) Anmeldetag: 17.02.2016
(51) Int. Cl.: C01B 13/11

(54) **OZONERZEUGUNG BEI HOHEN DRÜCKEN**
OZONE GENERATION AT HIGH PRESSURES
PRODUCTION D'OZONE SOUS HAUTES PRESSIONS

(43) Veröffentlichungstag der Anmeldung: 23.08.2017
(73) Patentinhaber: Xylem IP Management S.à.r.l., 1259 Senningerberg (LU)
(72) Erfinder: FIEKENS, Ralf, 33758 Schlossholte-Stukenbrock (DE); FIETZEK, Reiner, 32049 Herford (DE); SALVERMOSER, Manfred, 32049 Herford (DE); BRÜGGEMANN, Nicole, 32130 Enger (DE)
(74) Vertreter: Lenzing Gerber Stute

(56) Entgegenhaltungen:
- EP-A1- 2 835 347
- WO-A1-2007/014473
- DE-A1-102011 008 947
- US-A1- 2009 236 042
- US-A1- 2015 004 070
- R.G. Haverkamp ET AL: "Ozone Production in a High Frequency Dielectric Barrier Discharge Generator", OZONE: SCIENCE AND ENGINEERING., vol. 24, no. 5, 1 January 2002 (2002-01-01), pages 321-328, XP055288728, US ISSN: 0191-9512, DOI: 10.1080/01919510208901623

## Beschreibung

Die vorliegende Erfindung betrifft ein Verfahren zur Herstellung von Ozon unter erhöhtem Druck mit den Merkmalen des Oberbegriffs des Anspruchs 1.

In einigen Anwendungsbereichen von Ozon werden prozessbedingt hohe Drücke am Ausgang des Ozonerzeugers bis zu 12 bar benötigt. Dazu gehört beispielsweise in der Papierindustrie das Bleichen von Papier. Herkömmlicherweise werden zum Bleichen von Papier Ozongeneratoren eingesetzt, die Ozonkapazitäten von mehreren kg/h bei Arbeitsdrücken von etwa 1-2 bar aufweisen.

In der vorliegenden Beschreibung und den Patentansprüchen soll als technische Einheit des Drucks die Einheit "bar" verwendet werden. Diese ist zu verstehen als Überdruck gemessen gegenüber dem Atmosphärendruck. Der Zahlenwert des davon zu unterscheidenden Absolutdrucks ist um 1013 mbar größer.

Ein solcher Ozongenerator ist beispielsweise aus der Offenlegungsschrift WO/2013/136663 bekannt. Eine rohrförmige Hochspannungselektrode ist von einem rohrförmigen Dielektrikum und einer rohrförmigen Gegenelektrode umgeben. Die Elektroden sind konzentrisch zueinander ausgerichtet. Das Dielektrikum liegt an der Gegenelektrode auf der Innenseite an. Der Zwischenraum zwischen dem Dielektrikum und der Hochspannungselektrode wird von einem sauerstoffhaltigen Gas durchströmt. Zwischen dem Dielektrikum und der Hochspannungselektrode bilden sich im Betrieb stille Entladungen aus. Der Abstand zwischen dem Dielektrikum und der Hochspannungselektrode wird Spaltweite oder auch Schlagweite genannt. Der Ozongenerator kann bei einer Spaltweite von 0,5 mm mit einem Gasdruck zwischen 1,2 und 3,2 bar betrieben werden. Wird die Spaltweite um 0,2 mm verringert, liegt der Druckbereich zwischen 2 und 5,3 bar. Mit steigendem Gasdruck erhöht sich bei gleicher Spaltweite die zur Zündung notwendige Spannung. Eine Kompensation dieses Effekts wird hier durch die Verringerung der Spaltweite erzielt. Aus fertigungstechnischen Gründen kann der Spalt dieser Art von Ozongeneratoren nicht beliebig verkleinert werden, um einen Betrieb bei hohen Drücken zu gewährleisten. Zudem sind auf Grund von Isolationsproblemen Spannungsversorgungen nur bis etwa 20 kV einsetzbar. Herkömmliche Ozongeneratoren sind daher durch die maximale Spannung und die minimale Spaltweite auf einen Druckbereich beschränkt.

Außerdem spielt auch die Wirtschaftlichkeit der Ozonerzeugung eine wichtige Rolle. Diese Art der Ozongeneratoren erreichen mit steigendem Druck nicht mehr so hohe Ozonkonzentrationen, während mit sinkendem Druck die Effizienz der Ozonerzeugung abnimmt. Eine wirtschaftliche Ozonproduktion und die Erzeugung von hohen Ozonkonzentrationen ist bei hohen Drücken daher nicht möglich. Herkömmliche Ozongeneratoren besitzen abhängig von der Ozonkonzentration einen optimalen Betriebsdruck ("Effects of discharge gap width and gas pressure on ozone generation characterictics of an Air-Feed-Ozone generator", J. Kitayama et al., Proceedings 13th Ozone World Congress, Kyoto). Bei Abweichungen von diesem optimalen Betriebsdruck kommt es zu deutlichen Effizienzverlusten ("Ozone production in a high frequency dielectric barrier discharge generator", R.G. Haverkamp et al., Ozone Science & Engineering Vol. 24, pp 321-328). Deshalb sind für herkömmliche Ozongeneratoren höhere Betriebsdrücke unwirtschaftlich.

EP 2 835 347 A1 offenbart ein Verfahren zur Herstellung von Ozon unter erhöhtem Druck mit einer Kapazität von mehrere bis mehrere 10 kg Ozon/h mittels eines Ozongenerators mit einer Hochspannungselektrode und einer Gegenelektrode, die einen Zwischenraum begrenzen, in dem ein Dielektrikum angeordnet ist und der von einem sauerstoffhaltigen Gas mit einem Gasdruck von 0,2 bis 0,3 MPa (Absolutdruck) durchströmt wird. Die Spannungsversorgung stellt eine Hochspannung in einem Bereich von 10 kV bereit.

Um das Ozon auf den benötigten Druck zu verdichten, werden Wasserringkompressoren eingesetzt. Diese Kompressoren sind jedoch in der Anschaffung teuer und weisen einen hohen Energieverbrauch auf.

Es ist Aufgabe der vorliegenden Erfindung, ein Verfahren zur Herstellung von Ozon unter erhöhtem Druck bereitzustellen, bei dem hohe Ozonkonzentrationen und hohe Ozonkapazitäten effektiv erzielt werden können.

Diese Aufgabe wird von einem Verfahren mit den Merkmalen des Anspruchs 1 gelöst.

Danach ist ein Verfahren zur Herstellung von Ozon unter erhöhtem Druck mit einer Kapazität von wenigstens 1 kg Ozon/h mittels eines Ozongenerators mit einer Hochspannungselektrode und wenigstens einer Gegenelektrode, wobei die Hochspannungselektrode und die wenigstens eine Gegenelektrode einen Zwischenraum begrenzen, in dem wenigstens ein Dielektrikum angeordnet ist und der von einem sauerstoffhaltigen Gas mit einem Gasdruck p_{gas} durchströmt wird, und wobei die Hochspannungselektrode und die wenigstens eine Gegenelektrode mit einem Anschluss für eine elektrische Spannungsversorgung zur Erzeugung von Entladungen in wenigstens einem Entladungsspalt versehen sind, wobei die Spannungsversorgung eine Hochspannung in einem Bereich von 1 kV bis 50 kV bereitstellt und wobei Schlagweiten dᵢ der Entladung zwischen einer kleinsten Schlagweite dₘᵢₙ und einer größten Schlagweite dₘₐₓ verteilt sind, vorgesehen, wobei der Gasdruck p_{gas} des sauerstoffhaltigen Gases am Ausgang des Ozongenerators wenigstens 3 bar beträgt. Mit diesem Verfahren kann wirtschaftlich ohne Verwendung von Wasserringkompressoren Ozon unter erhöhtem Druck mit hoher Ozonkonzentration und hoher Ozonkapazität hergestellt werden.

Vorzugsweise stellt die Spannungsversorgung eine Hochspannung im Bereich von 10 kV bis 30 kV und insbesondere von 15 kV bis 20 kV bereit. Spannungsversorgungen in dieser Größenordnung sind industriell einsetzbar und entsprechend kostengünstig. Weiterhin bevorzugt wird eine Ozonkonzentration von wenigstens 10 Gew.-% erreicht.

In einer Ausführungsform beträgt der Gasdruck p_{gas} des sauerstoffhaltigen Gases wenigstens 6 bar und in einer vorteilhaften Ausführungsform beträgt der Gasdruck p_{gas} zwischen 10 bar und 12 bar.

Das sauerstoffhaltige Gas weist vorzugsweise wenigstens 80% O₂ und besonders bevorzugt wenigstens 98% O₂ auf. Damit sind hohe Ozonkonzentrationen mit guter Energieeffizienz produzierbar.

Vorzugsweise wird das Ozon mit einer Produktionsrate von wenigstens 20 kg Ozon/h und insbesondere 100 kg Ozon/h hergestellt. Bei dieser Kapazität ist eine Ozonerzeugungsanlage der oben beschriebenen Art besonders effektiv.

Es ist vorteilhaft, wenn das sauerstoffhaltige Gas mit einer Einspeiserate im Bereich von 500 kg/h O₂ bis 800 kg/h O₂ den Zwischenraum durchströmt.

In einer vorteilhaften Ausführungsform ist die kleinste Schlagweite gleich Null mm. Die Schlagweitenverteilung ist vorzugsweise kontinuierlich und periodisch oder stochastisch verteilt.

Vorzugsweise weist der Ozongenerator eine einzige Gegenelektrode auf und das Dielektrikum ist in Anlage an die Gegenelektrode angeordnet. Bei dieser Anordnung handelt es sich um ein klassisches Ein-Spalt-System.

Die Verteilung der Schlagweiten ist bevorzugt durch ein Flächengebilde aus Draht gebildet. Der Begriff "Flächengebilde" ist aus der Textiltechnik bekannt (Englisch: woven or non-woven fabric). Als textiles Flächengebilde ist jedes flächige Gebilde zu bezeichnen, das aus textilen Rohstoffen nach einer Textiltechnologie hergestellt wird. Im Zusammenhang der vorliegenden Patentanmeldung wird dementsprechend unter einem Flächengebilde jedes plane, gekrümmte oder gewölbte flächige Gebilde verstanden, das nach einer Textiltechnologie hergestellt wird. Darunter fallen unter anderem Fadenverbundstoffe, wie Gewebe, Maschenstoffe, Geflechte und Netze, und Faserverbundstoffe, wie Vliesstoffe und Watten.

Dabei ist es vorteilhaft, wenn das Flächengebilde aus Draht den Zwischenraum ausfüllt.

Vorzugsweise ist die Hochspannungselektrode wenigstens teilweise aus dem Flächengebilde gebildet. Dabei kann auch vorgesehen sein, dass das Flächengebilde komplett die Hochspannungselektrode bildet.

Eine bevorzugte Ausführungsform der Erfindung wird nachfolgend anhand der Zeichnungen näher erläutert. Es zeigen:
- Fig. 1:: eine perspektivische Darstellung einer Elektrodenanordnung aus dem Stand der Technik, sowie
- Fig. 2:: einen prinzipiellen Verlauf des Energieverbrauchs eines herkömmlich betriebenen Ozonerzeugers und eines Ozonerzeugers betrieben mit dem erfindungsgemäßen Verfahren in Abhängigkeit des Gasdrucks.

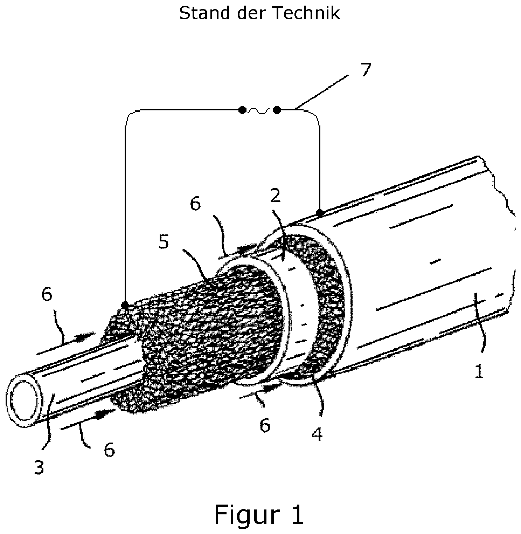

Figur 1 zeigt eine Elektrodenanordnung eines Ozongenerators, wie sie aus DE 10 2011 008 947 A1 bekannt ist. Solche Ozongeneratoren werden gruppiert in einem Ozonerzeuger eingesetzt. Die Ozongeneratoren sind dabei nach Art eines Rohrbündelwärmetauschers parallel zueinander zwischen zwei Rohrböden angeordnet und elektrisch parallel geschaltet. Der gezeigte Ozongenerator weist eine rohrförmigen Außenelektrode 1, ein ebenfalls rohrförmigen Dielektrikum 2 und einen innenliegenden Stab 3 auf, wobei die einzelnen Komponenten verkürzt und in Axialrichtung auseinander gezogen dargestellt sind. Die Anordnung ist rotationssymmetrisch. Die Außenelektrode 1, das Dielektrikum 2 und der Stab 3 sind konzentrisch zueinander ausgerichtet. Zwischen der Außenelektrode 1 und dem Dielektrikum 2 liegt ein Drahtgestrick 4, das den Zwischenraum ausfüllt. Entsprechend ist zwischen dem Dielektrikum 2 und dem Stab 3 ein Drahtgestrick 5 vorgesehen, das den dort befindlichen Zwischenraum ebenfalls ausfüllt. Die Außenelektrode 1 ist als Edelstahlrohr ausgebildet. Die bei der Ozonproduktion entstehende Abwärme wird durch Kühlwasser, welches an der Außenseite der Außenelektrode zwischen den Rohrböden entlang geführt wird, gekühlt. Das Dielektrikum 2 ist ein Glasrohr. Die Drahtgestricke 4 und 5 sind vorzugsweise als sogenannte Rundhohlschnur ebenfalls aus einem Drahtgestrick aus Edelstahl gefertigt. Der im Zentrum der Elektrodenanordnung angeordnete Stab 3 ist ein Isolator, beispielsweise aus Glas oder aus einem anderen sauerstoff- und ozonkompatiblen Material gefertigt. Der Stab 3 kann massiv ausgeführt sein. Im Betrieb wird die Elektrodenanordnung mit einem sauerstoffhaltigen Einsatzgas mit einem Gasdruck von 1 bis 2 bar beaufschlagt, welches die Drahtgestricke 4 und 5 in Richtung der Pfeile 6 durchströmt. Schematisch ist eine elektrische Spannungsversorgung 7 angedeutet, die einerseits mit der Außenelektrode 1 und andererseits mit dem Gestrick 5 kontaktiert ist. Die von der Spannungsversorgung 7 zur Verfügung gestellte Betriebsspannung bewirkt in dem Raum zwischen den Elektroden 1, 5 und dem Dielektrikum 2 eine stille elektrische Entladung, die aus dem Sauerstoff, der in Richtung der Pfeile 6 durch die Gestricke 4 und 5 strömt, Ozon generiert.

Bei dem dargestellten Aufbau ist die innere Elektrode allein von dem Gestrick 5 gebildet, während der Stab 3 als Isolator eine stützende Funktion ausübt, die das gleichmäßige Ausfüllen des Innenraums des Dielektrikums 2 mit dem Drahtgestrick 5 gewährleistet. Durch diese Form der Elektrode kommt es zu einer Überlagerung von Volumen- und Oberflächenladung.

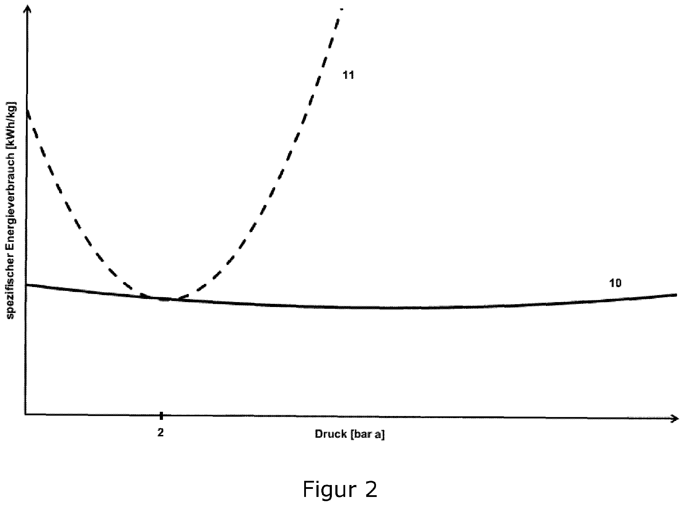

Figur 2 zeigt Kurven zum spezifischen Energieverbrauch von Ozongeneratoren. In Bezug auf das erfindungsgemäße Verfahren sind *U*(*t*)=*U*₀*sin(2π**f***t*) selbst bei verhältnismäßig hohen Gasdrücken und Spannungsamplituden (im angegebenen Bereich) noch Oberflächenpunkte der Hochspannungselektrode vorhanden, von denen stille Entladungen ausgehen. Überraschend ist in diesem Zusammenhang, dass der spezifische Energieverbrauch des Ozongenerators, gemessen in kWh/kg Ozon, durch diesen erfindungsgemäßen Betrieb 10 bei hohen Drücken im Vergleich zu herkömmlichen Ozonerzeugern 11 deutlich niedriger ist. Der zuvor beschriebene, für Ozongeneratoren charakteristische optimale Betriebsdruck in Abhängigkeit von dem spezifischen Energieverbrauch liegt in einem engen Bereich um das Minimum einer parabelförmigen Verteilung (siehe Kurve 11). Hingegen zeigt ein Ozongenerator mit profilierter Hochspannungselektrode eine deutlich flachere Verteilung (siehe Kurve 10). Der spezifische Energieverbrauch ist auch bei hohen Drücken, zum Beispiel von mehr als 3 bar oder auch noch höheren Drücken immer noch verhältnismäßig gering. Da die Verteilung im Minimum flacher ist, kann der Betriebsdruck in einem breiten Bereich, zum Beispiel in einem Bereich von 1 bis 12 bar liegen, bei nahezu gleicher Effizienz der Ozonerzeugung.

Der Vorteil dieses Verfahrens ist weiterhin, dass kein Kompromiss zwischen Gasdruck und Kapazität und/oder Ozonkonzentration eingegangen wird.

Der Ozongenerator wird erfindungsgemäß bei Kapazitäten von einem bis mehreren 100 kg Ozon/h betrieben. In einer Ausführungsform ist die Ozonkonzentration wenigstens 12 Gew.-% Ozon.

Daher eignet sich das erfindungsgemäße Verfahren zur Ozonproduktion für die Papierindustrie, da hohe Ozonkonzentrationen und hohe Ozonkapazitäten bei hohen Drücken effektiv hergestellt werden können.

Die Hochspannungselektrode ist ein elektrisch leitendes Material, vorzugsweise Edelstahl mit profilierter Oberfläche. Die Hochspannungselektrode kann ein Drahtgeflecht oder ein Gestrick, ein Gewebe aber auch eine Drahtwicklung oder ein auf einer Oberfläche aufgebrachtes Granulat sein. Faserige Gebilde wie Fliese oder Filze sind ebenso geeignet wie Strukturen, die durch mechanische Bearbeitung oder durch Beschichtung, auf die Elektrode aufgebracht werden. Dabei ist die Profilierung stochastisch oder periodisch sowohl in Längs- als auch in Umfangsrichtung der Elektrode verteilt.

Es ist aber auch denkbar, anstelle der Elektrode das Dielektrikum zu profilieren, wodurch der gleiche Effekt erzielt werden kann.

Das erfindungsgemäße Verfahren ist nicht auf rohrförmige Elektrodenanordnung begrenzt. Es kann sowohl bei Röhren- als auch bei Plattenozonerzeugern verwendet werden. Dabei ist die Anwendung bei Einspalt- als auch Mehrspaltsystemen vorgesehen. Das elektrisch leitende Material der Elektrode kann mit oder ohne Trägermaterial in den Entladungsraum eingebracht werden.

Das erfindungsgemäße Verfahren zur Ozonerzeugung kann natürlich auch allgemein bei Plasmageneratoren Anwendung finden.

Durch das erfindungsgemäße Verfahren kann der Ozongenerator an die kundenspezifischen Anforderungen angepasst werden. Dies ist ökonomisch aufgrund immer weiter ansteigender Energiepreise als auch ökologisch vorteilhaft. Eine Ozongenerierung bei am Ausgang des Ozonerzeugers anliegenden hohen Drücken von bis zu 12 bar ist technisch und wirtschaftlich möglich. Auf herkömmlich notwendige Wasserringverdichter kann somit verzichtet werden.

## Patentansprüche

1. Verfahren zur Herstellung von Ozon unter erhöhtem Druck mit einer Kapazität von wenigstens 1 kg Ozon/h mittels eines Ozongenerators mit einer Hochspannungselektrode (5) und wenigstens einer Gegenelektrode (1), wobei die Hochspannungselektrode (5) und die wenigstens eine Gegenelektrode (1) einen Zwischenraum begrenzen, in dem wenigstens ein Dielektrikum angeordnet ist und der von einem sauerstoffhaltigen Gas mit einem Gasdruck p_{gas} durchströmt wird, und wobei die Hochspannungselektrode (5) und die wenigstens eine Gegenelektrode (1) mit einem Anschluss für eine elektrische Spannungsversorgung (7, 8) zur Erzeugung von Entladungen in wenigstens einem Entladungsspalt versehen sind, wobei die Spannungsversorgung (7, 8) eine Hochspannung in einem Bereich von 1 kV bis 50 kV bereitstellt und wobei Schlagweiten dᵢ (9) der Entladung zwischen einer kleinsten Schlagweite dₘᵢₙ und einer größten Schlagweite dₘₐₓ verteilt sind, **dadurch gekennzeichnet, dass** der Gasdruck p_{gas} des sauerstoffhaltigen Gases wenigstens 3 bar beträgt, wobei der Gasdruck p_{gas} des sauerstoffhaltigen Gases als Überdruck gegenüber dem Atmosphärendruck gemessen wird.

2. Verfahren nach Anspruch 1, **dadurch gekennzeichnet, dass** die Spannungsversorgung (7, 8) eine Hochspannung im Bereich von 10 kV bis 30 kV bereitstellt.

3. Verfahren nach Anspruch 1, **dadurch gekennzeichnet, dass** die Spannungsversorgung (7, 8) eine Hochspannung im Bereich von 15 kV bis 20 kV bereitstellt.

4. Verfahren nach einem der vorhergehenden Ansprüche, **dadurch gekennzeichnet, dass** das Verfahren derart ausgeführt wird, dass das hergestellte Ozon eine Ozonkonzentration von wenigstens 10 Gew.-% aufweist.

5. Verfahren nach einem der vorhergehenden Ansprüche, **dadurch gekennzeichnet, dass** der Gasdruck p_{gas} des sauerstoffhaltigen Gases wenigstens 6 bar beträgt.

6. Verfahren nach einem der vorhergehenden Ansprüche, **dadurch gekennzeichnet, dass** der Gasdruck p_{gas} des sauerstoffhaltigen Gases zwischen 10 bar und 12 bar beträgt.

7. Verfahren nach einem der vorhergehenden Ansprüche, **dadurch gekennzeichnet, dass** das sauerstoffhaltige Gas wenigstens 80% O₂ aufweist.

8. Verfahren nach einem der vorhergehenden Ansprüche, **dadurch gekennzeichnet, dass** das sauerstoffhaltige Gas wenigstens 98% O₂ aufweist.

9. Verfahren nach einem der vorhergehenden Ansprüche, **dadurch gekennzeichnet, dass** das Verfahren derart ausgeführt wird, dass Ozon mit einer Produktionsrate von wenigstens 20 kg Ozon/h hergestellt wird.

10. Verfahren nach einem der vorhergehenden Ansprüche, **dadurch gekennzeichnet, dass** das Verfahren derart ausgeführt wird, dass Ozon mit einer Produktionsrate von wenigstens 100 kg Ozon/h hergestellt wird.

11. Verfahren nach einem der vorhergehenden Ansprüche, **dadurch gekennzeichnet, dass** das sauerstoffhaltige Gas mit einer Einspeiserate im Bereich von 500 kg/h O₂ bis 800 kg/h O₂ den Zwischenraum durchströmt.

12. Verfahren nach einem der vorhergehenden Ansprüche, **dadurch gekennzeichnet, dass** die kleinste Schlagweite dₘᵢₙ (9) gleich Null ist.

13. Verfahren nach einem der vorhergehenden Ansprüche, **dadurch gekennzeichnet, dass** der Ozongenerator eine einzige Gegenelektrode (1) aufweist und das Dielektrikum (2) in Anlage an die Gegenelektrode (1) angeordnet ist.

14. Verfahren nach einem der vorhergehenden Ansprüche, **dadurch gekennzeichnet, dass** die Verteilung der Schlagweiten (9) durch ein Flächengebilde (5) aus Draht gebildet ist.

15. Verfahren nach Anspruch 14, **dadurch gekennzeichnet, dass** das Flächengebilde (5) aus Draht den Zwischenraum ausfüllt.

## Claims

1. Method for the production of ozone at increased pressure having a capacity of at least 1kg ozone/h by means of an ozone generator having a high voltage electrode (5) and at least one counter electrode (1), wherein the high voltage electrode (5) and the at least one counter electrode (1) delimit a gap in which at least one dielectric is arranged and which is flowed through by gas containing oxygen having a gas pressure p_{gas}, and wherein the high voltage electrode (5) and the at least one counter electrode (1) are provided with a connection for an electrical voltage supply (7, 8) for the generation of discharges in at least one discharge gap, wherein the voltage supply (7, 8) provides a high voltage ranging from 1kV to 50kV and wherein sparking distances dᵢ (9) of the discharge are distributed between a smallest sparking distance dₘᵢₙ and a greatest sparking distance dₘₐₓ, **characterised in that** the gas pressure p_{gas} of the gas containing oxygen amounts to at least 3 bar, wherein the gas pressure p_{gas} of the gas containing oxygen is measured as an excess pressure compared to the atmospheric pressure.

2. Method according to Claim 1, **characterised in that** the voltage supply (7, 8) provides a high voltage ranging from 10kV to 30kV.

3. Method according to Claim 1, **characterised in that** the voltage supply (7, 8) provides a high voltage ranging from 15kV to 20kV.

4. Method according to any one of the preceding claims, **characterised in that** the method is executed in such a way that the produced ozone has an ozone concentration of at least 10% by weight.

5. Method according to any one of the preceding claims, **characterised in that** the gas pressure p_{gas} of the gas containing oxygen amounts to at least 6 bar.

6. Method according to any one of the preceding claims, **characterised in that** the gas pressure p_{gas} of the gas containing oxygen amounts to between 10 bar and 12 bar.

7. Method according to any one of the preceding claims, **characterised in that** the gas containing oxygen has at least 80% O₂.

8. Method according to any one of the preceding claims, **characterised in that** the gas containing oxygen has at least 98% O₂.

9. Method according to any one of the preceding claims, **characterised in that** the method is executed in such a way that ozone is produced at a production rate of at least 20kg ozone/h.

10. Method according to any one of the preceding claims, **characterised in that** the method is executed in such a way that ozone is produced at a production rate of at least 100kg ozone/h.

11. Method according to any one of the preceding claims, **characterised in that** the gas containing oxygen flows through the gap at a feed rate ranging from 500kg/h O₂ to 800kg/h O₂.

12. Method according to any one of the preceding claims, **characterised in that** the smallest sparking distance dₘᵢₙ (9) is equal to zero.

13. Method according to any one of the preceding claims, **characterised in that** the ozone generator has a single counter electrode (1) and the dielectric (2) is arranged to abut onto the counter electrode (1).

14. Method according to any one of the preceding claims, **characterised in that** the distribution of the sparking distances (9) is formed by a fabric (5) made from wire.

15. Method according to Claim 14, **characterised in that** the fabric (5) made from wire fills the gap.

## Revendications

1. Procédé de production d'ozone sous pression accrue avec une capacité d'au moins 1 kg d'ozone par heure au moyen d'un générateur d'ozone comprenant une électrode à haute tension (5) et au moins une contre-électrode (1), l'électrode à haute tension (5) et l'au moins une contre-électrode (1) délimitant un espace intermédiaire dans lequel est disposé au moins un diélectrique et lequel est traversé par un courant de gaz contenant de l'oxygène à une pression de gaz p_{gas}, et l'électrode à haute tension (5) et l'au moins une contre-électrode (1) étant pourvues d'une borne pour une alimentation électrique (7, 8) en vue de générer des décharges dans au moins un entrefer de décharge, l'alimentation électrique (7, 8) fournissant une haute tension dans une plage de 1 kV à 50 kV et les distances d'isolement dᵢ (9) de la décharge étant réparties entre une distance d'isolement minimale dₘᵢₙ et une distance d'isolement maximale dₘₐₓ, **caractérisé en ce que** la pression de gaz p_{gas} du gaz contenant de l'oxygène est au moins égale à 3 bar, la pression de gaz p_{gas} du gaz contenant de l'oxygène étant mesurée en tant que surpression par rapport à la pression atmosphérique.

2. Procédé selon la revendication 1, **caractérisé en ce que** l'alimentation électrique (7, 8) fournit une haute tension dans la plage de 10 kV à 30 kV.

3. Procédé selon la revendication 1, **caractérisé en ce que** l'alimentation électrique (7, 8) fournit une haute tension dans la plage de 15 kV à 20 kV.

4. Procédé selon l'une des revendications précédentes, **caractérisé en ce que** le procédé est mis en oeuvre de telle sorte que l'ozone produit présente une concentration d'ozone minimale de 10 % massiques.

5. Procédé selon l'une des revendications précédentes, **caractérisé en ce que** la pression de gaz p_{gas} du gaz contenant de l'oxygène est au minimum de 6 bar.

6. Procédé selon l'une des revendications précédentes, **caractérisé en ce que** la pression de gaz p_{gas} du gaz contenant de l'oxygène est comprise entre 10 bar et 12 bar.

7. Procédé selon l'une des revendications précédentes, **caractérisé en ce que** le gaz contenant de l'oxygène possède au moins 80 % d'O₂.

8. Procédé selon l'une des revendications précédentes, **caractérisé en ce que** le gaz contenant de l'oxygène possède au moins 98 % d'O₂.

9. Procédé selon l'une des revendications précédentes, **caractérisé en ce que** le procédé est mis en oeuvre de telle sorte que l'ozone est produit avec un débit de production d'au moins 20 kg d'ozone par heure.

10. Procédé selon l'une des revendications précédentes, **caractérisé en ce que** le procédé est mis en oeuvre de telle sorte que l'ozone est produit avec un débit de production d'au moins 100 kg d'ozone par heure.

11. Procédé selon l'une des revendications précédentes, **caractérisé en ce que** le gaz contenant de l'oxygène s'écoule à travers l'espace intermédiaire avec un débit d'injection dans la plage de 500 kg/h d'O₂ à 800 kg/h d'O₂.

12. Procédé selon l'une des revendications précédentes, **caractérisé en ce que** la distance d'isolement dₘᵢₙ (9) minimale est égale à zéro.

13. Procédé selon l'une des revendications précédentes, **caractérisé en ce que** le générateur d'ozone possède une seule contre-électrode (1) et le diélectrique (2) est disposé en appui contre la contre-électrode (1).

14. Procédé selon l'une des revendications précédentes, **caractérisé en ce que** la répartition des distances d'isolement (9) est formée par une structure plane (5) en fil métallique.

15. Procédé selon la revendication 14, **caractérisé en ce que** la structure plane (5) en fil métallique remplit l'espace intermédiaire.
